# DEMANDE DE BREVET EUROPEEN

(11) **EP 0 741 241 A1**
(43) Date de publication de la demande: **06.11.1996**
(21) Numéro de dépôt: 96400940.1
(22) Date de dépôt: 03.05.1996
(51) Int. Cl.: F02M 3/12, B60T 17/02, F02M 17/52

(54) **Moteur à combustion interne pour véhicule automobile muni d'un dispositif perfectionné d'amplification de la dépression du cicuit d'admission**

(30) Priorité: 05.05.1995 FR 9505378; 05.05.1995 FR 9505379
(71) Demandeur: Société Anonyme dite: REGIE NATIONALE DES USINES RENAULT, 92109 Boulogne Billancourt (FR)
(72) Inventeur: Arnaud, Henri, 91590 Cerny (FR)
(74) Mandataire: Fernandez, Francis Lionel

(57) **Abrégé**

Moteur à combustion interne pour véhicule automobile du type comportant une conduite de ralenti (14) qui est montée en dérivation sur le circuit d'admission (10), qui contourne le papillon des gaz (12) et dans laquelle est interposée une vanne de régulation (16) de ralenti du moteur, du type comportant un dispositif d'amplification (18) de la dépression du circuit d'admission (10) à effet Venturi-Coanda qui coopère avec la vanne (16) de régulation de ralenti du moteur et qui utilise au moins une partie du débit dans la conduite de ralenti (14) comme débit inducteur dans le dispositif (18) pour fournir une dépression amplifiée à des organes annexes du véhicule tel qu'un système de freinage à dépression, caractérisé en ce qu'au moins pour les faibles débits de ralenti, la totalité du débit de ralenti traverse le dispositif d'amplification (18).

## Description

L'invention concerne un moteur à combustion interne pour véhicule automobile comportant un dispositif d'amplification de dépression.

L'invention concerne plus précisément un moteur à combustion interne pour véhicule automobile du type comportant une conduite de ralenti qui est montée en dérivation sur le circuit d'admission, qui contourne le papillon des gaz et dans laquelle est interposée une vanne de régulation de ralenti du moteur, du type comportant un dispositif d'amplification de la dépression du circuit d'admission qui utilise au moins une partie du débit dans la conduite de ralenti comme débit inducteur dans le dispositif pour fournir une dépression amplifiée à des organes annexes du véhicule et qui comporte une tuyère convergente-divergente, un tube de prise de dépression monté coaxialement en amont dans la tuyère de manière à déboucher sensiblement au niveau du col de la tuyère et une entrée d'alimentation du débit inducteur qui débouche sensiblement en amont de la tuyère de manière que le débit inducteur, accéléré dans la tuyère par effet Venturi, provoque une dépression supplémentaire par effet Coanda dans le tube de prise de dépression.

Un tel dispositif est décrit et représenté dans le document FR-A-2.388.142.

Il est connu d'utiliser la dépression créée dans le collecteur d'admission d'un moteur à combustion interne pour alimenter des organes annexes du véhicule automobile tels que, par exemple, un dispositif d'assistance au freinage à dépression également appelé servofrein.

Toutefois, les besoins d'assistance étant de plus en plus importants, on a été conduit à devoir augmenter la taille des servofreins puis à utiliser des dispositifs d'amplification de la dépression tels que décrits précédemment.

Les dispositifs d'amplification de la dépression par effet Venturi-Coanda sont disposés généralement, comme on peut le voir dans le document ci-dessus, en dérivation du circuit de ralenti qui est lui-même monté en dérivation du circuit d'admission.

Un fonctionnement optimal du dispositif d'amplification est obtenu pour une vitesse importante des gaz à travers le dispositif.

Dans ce but on est donc conduit à aménager une faible section de passage dans le dispositif en rapprochant le plus possible l'orifice aval du tube de prise de dépression de la surface convergente de la tuyère.

On obtient ainsi un fonctionnement satisfaisant du dispositif d'amplification de dépression mais il limite le débit maximum susceptible de le traverser.

Or, pour maintenir le régime de ralenti dans un moteur de faible cylindrée (par exemple inférieur à 2 litres de cylindrée), il est nécessaire, lorsque le moteur est chaud, de fournir environ 5 Kg d'air/heure au circuit d'admission.

Lorsque le moteur est froid, ou lorsque des organes auxiliaires consommateurs de puissance se mettent en route au cours du ralenti, il est nécessaire, pour maintenir le régime de ralenti, de fournir au moteur des quantités d'air plus de quatre fois supérieures.

Cette variation du débit au travers du circuit de ralenti est gérée par la vanne de régulation de ralenti et par le circuit de pilotage de cette vanne.

Toutefois, un tel débit ne peut traverser le dispositif d'amplification de dépression qui doit être court-circuité, selon l'agencement représenté sur la figure 1 du document FR-A-2.388.142.

Il s'en suit que même à faible charge, seule une partie des gaz d'admission sont utilisés au ralenti pour provoquer l'effet d'amplification de la dépression.

Si cela n'est pas très gênant pour des moteurs de forte cylindrée pour lesquels les débits d'air sont en toutes circonstances relativement importants, cela est insuffisant pour les moteurs de plus faible cylindrée.

L'invention a donc pour but de proposer un dispositif d'amplification de dépression dont la conception permet d'utiliser au maximum le débit d'air dans le circuit de ralenti tout en permettant à ce débit d'être suffisant pour les toutes les conditions de fonctionnement du moteur au ralenti.

Dans ce but, l'invention propose un moteur à combustion interne du type vu précédemment, caractérisé en ce que, pour au moins les faibles débits de ralenti, la totalité du débit de ralenti est utilisée comme débit inducteur dans le dispositif d'amplification de la dépression.

Selon d'autres caractéristique d'une première variante de l'invention :
- le dispositif d'amplification de la dépression est monté en parallèle à la vanne de régulation de ralenti du moteur, il est muni d'une vanne commandée de régulation du débit qui le traverse et la valeur de ce débit de ralenti est déterminée par le degré d'ouverture de la vanne de régulation du débit inducteur traversant le dispositif d'amplification de la dépression ;
- pour les forts débits de ralenti, la vanne de régulation du débit inducteur qui traverse le dispositif d'amplification de la dépression est ouverte de manière à déterminer un débit de fonctionnement optimal dans le dispositif, et le complément de débit de ralenti nécessaire au fonctionnement du moteur est déterminé par la vanne de régulation du débit de ralenti ;
- selon un autre mode de réalisation, le dispositif comporte une vanne unique de régulation du débit de ralenti interposée dans la conduite de ralenti qui comporte deux sorties à ouverture commandée dont la première débouche dans la conduite de ralenti et dont la seconde est reliée à une entrée de débit inducteur du dispositif, et l'ouverture de la première sortie est retardée par apport à l'ouverture de la seconde sortie ;
- la vanne de régulation de ralenti comporte un corps principal dans lequel une tige peut coulisser axialement sous l'effet de moyens de commandes, notamment électromagnétiques, la tige porte deux pointeaux destinés à coopérer chacun avec un siège pour déterminer les deux sorties de la vanne, et le pointeau de la première sortie comporte une course morte qui permet de retarder l'ouverture de la première sortie par rapport à la seconde.

Selon d'autres caractéristiques d'une seconde variante de l'invention :
- la vanne de régulation du débit de ralenti et le dispositif d'amplification de dépression sont montés en série dans la conduite de ralenti ;
- le dispositif d'amplification de la dépression comporte deux étages d'amplification amont et aval disposés en série et le débit de ralenti est partagé en deux débits inducteurs alimentant les deux étages respectivement ;
- l'étage d'amplification amont possède une section de passage annulaire, délimitée entre son tube de prise de dépression et sa tuyère, inférieure à la section de passage de l'étage d'amplification aval.
- le divergent de la tuyère de l'étage d'amplification amont constitue le tube de prise de dépression de l'étage d'amplification aval ;
- la vanne de régulation du débit de ralenti est disposée en amont du point de partage des deux débits inducteurs alimentant les deux étages ;
- selon un autre mode de réalisation, la position axiale du tube de prise de dépression dans la tuyère est réglable de manière à faire varier la section de passage disponible pour le débit inducteur entre au moins deux valeurs ;
- la position axiale du tube de prise de dépression dans la tuyère est commandée entre deux positions extrêmes d'ouverture et de fermeture de manière à faire varier la section de passage disponible pour le débit de ralenti afin de réaliser la vanne de régulation de ralenti intégrée au dispositif d'amplification de la dépression ;
- le tube de prise de dépression est relié à un amplificateur d'effort de freinage à dépression.

D'autres caractéristiques et avantages de l'invention apparaîtront à la lecture de la description détaillée qui suit pour la compréhension de laquelle on se reportera aux dessins annexés dans lesquels :
- La figure 1 est une vue schématique du circuit d'admission d'un moteur à combustion interne muni d'un dispositif d'amplification de dépression conforme aux enseignements de l'invention ;
- la figure 2 est une vue similaire à celle de la figure 1 qui représente un deuxième mode de réalisation du dispositif d'amplification de dépression selon l'invention.
- la figure 3 est une vue similaire à celle de la figure 1 qui représente un troisième mode de réalisation du dispositif d'amplification de dépression selon l'invention ;
- la figure 4 est une vue similaire à celle de la figure 1 qui représente un quatrième mode de réalisation du dispositif d'amplification de dépression selon l'invention ;

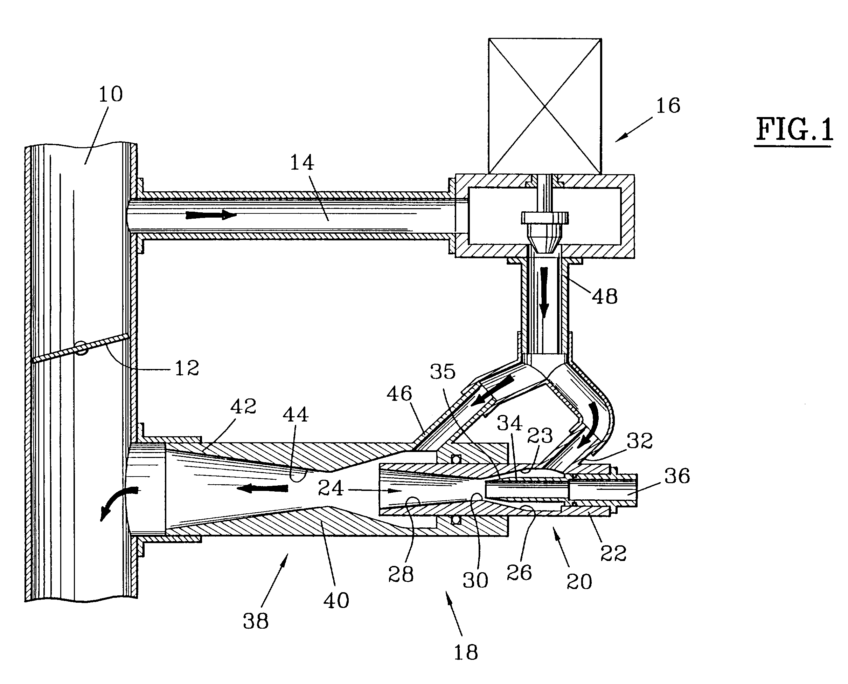

On a représenté sur la figure 1 une conduite d'admission 10 d'un moteur à combustion interne pour véhicule automobile qui est reliée en amont à un filtre à air (non représenté) et en aval au collecteur d'admission du moteur (non représenté).

De manière connue, la conduite d'admission 10 est munie d'un papillon de gaz 12 et d'une conduite 14 de dérivation, pour la régulation du régime de ralenti, qui contourne le papillon de gaz 12.

Conformément aux enseignements de l'invention, on a monté dans la dérivation de ralenti 14 une vanne de régulation 16 et un dispositif 18 d'amplification de la dépression du circuit d'admission du moteur.

Le dispositif d'amplification 18 débouche ainsi dans le circuit d'admission 10, en aval du papillon des gaz 12.

Le dispositif d'amplification de la dépression 18 représenté dans ce premier mode de réalisation est un dispositif à deux étages d'amplification mis bout à bout.

Le premier étage amont 20 d'amplification comporte un corps sensiblement tubulaire 22 dont l'extrémité aval présente une forme interne de tuyère 24.

La tuyère 24 comporte successivement un cône convergent 26 et un cône divergent 28 qui délimitent un col 30 de diamètre réduit.

Le premier étage d'amplification 20 comporte également une entrée d'alimentation de gaz inducteurs 32 qui débouche dans le corps tubulaire 22, en amont de la tuyère 24.

L'extrémité amont du corps 22 du premier étage d'amplification 20 reçoit l'extrémité aval 34 d'un tube de prise de dépression 36.

Le tube de prise de dépression 36 est relié aux différents organes annexes (non représentés) du véhicule qui nécessitent, pour leur fonctionnement, une source de dépression.

L'extrémité aval 34 du tube de prise de dépression 36 est disposée axialement dans le corps tubulaire 22 du premier étage d'amplification 20, sensiblement en aval de l'entrée d'alimentation 32 de gaz inducteurs, non loin du col 30 de la tuyère 24.

Les gaz d'admission qui sont admis dans le premier étage d'amplification 20 par l'entrée d'alimentation 32 de gaz inducteurs sont donc canalisés dans le dispositif d'amplification 18 entre la surface interne 23 du corps tubulaire 22 et la surface externe 35 de l'extrémité aval 34 du tube de prise de dépression 36.

Du fait de la présence du cône convergent 26 de la tuyère 24, la section de passage disponible pour les gaz inducteurs se trouve réduite et il y a donc un effet de tuyère qui accélère les gaz au niveau du col 30 de la tuyère 24.

Ces gaz à haute vitesse provoquent, par effet Coanda, une dépression dans le tube de prise de dépression 36.

Selon une caractéristique particulière de ce mode de réalisation de l'invention, le dispositif d'amplification de la dépression comporte un deuxième étage aval 38 d'amplification de la dépression.

Le deuxième étage d'amplification 38 comporte lui aussi un corps sensiblement tubulaire 40 dont l'extrémité aval 42 présente un profil interne en forme de tuyère 44 et comporte également un entrée d'alimentation 46 de gaz inducteurs.

Le second étage aval d'amplification 38 est disposé en série avec le premier étage amont 20, en ce sens que l'extrémité aval du corps tubulaire 22 du premier étage 20 constitue un tube de prise de dépression pour le second étage 38 et est donc agencée de manière à déboucher axialement dans le corps tubulaire 40 du second étage 38 en aval de l'entrée d'alimentation 46 des gaz inducteurs, au niveau du col de la tuyère 44 du second étage 38.

Les deux entrées d'alimentation 32, 46 du premier étage 20 et du second étage 22 sont reliées à la sortie 48 de la vanne de régulation 16 du débit de ralenti.

Ainsi, selon une caractéristique de l'invention, l'intégralité du débit de gaz de ralenti, qui est déterminé par la vanne de régulation du débit 16 en fonction des besoins du moteur, est utilisé comme débit de gaz inducteurs dans le dispositif d'amplification de la dépression 18.

Selon le mode de réalisation préféré de l'invention représenté sur la figure 1, les deux étages d'amplification 20, 38 n'ont pas les mêmes dimensions géométriques.

En effet, l'entrée d'alimentation 32 et la section de passage des gaz inducteurs, entre l'extrémité aval 34 du tube de prise de dépression 36 et le cône convergent 26 de la tuyère 24, sont choisies de taille réduite pour le premier étage d'amplification 20 par rapport aux éléments similaires du second étage d'amplification 38.

Ainsi, même lorsque le débit de gaz à travers la dérivation de ralenti 14 est faible, le débit de gaz qui traverse le premier étage d'amplification 20 est suffisamment accéléré pour provoquer un effet appréciable d'amplification de la dépression.

Au contraire, les dimensions plus importantes du second étage d'amplification 38 permettent à la dérivation de ralenti 14 de fournir des débits de gaz suffisants pour maintenir le régime de ralenti du moteur quelles que soient ses conditions de fonctionnement, tout en assurant alors un effet maximal d'amplification de la dépression.

Enfin, dans tous les cas, les deux étages d'amplification étant disposés en série, le débit de gaz est dirigé simultanément dans les deux étages 20, 38 qui cumulent ainsi leurs effets d'amplification.

Ce premier mode de réalisation de l'invention possède l'avantage d'utiliser au mieux le débit de gaz de ralenti pour créer un effet d'amplification de la dépression tout en gardant une architecture tout à fait classique puisqu'il s'agit simplement d'interposer un élément nouveau dans un circuit de dérivation de ralenti 14 tandis que la vanne de régulation 16 est d'un modèle connu.

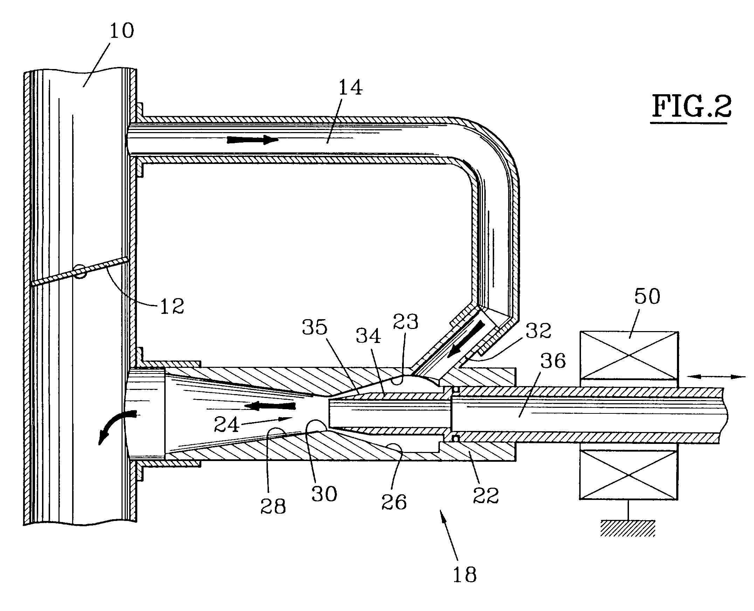

On a représenté sur la figure 2 un deuxième mode de réalisation d'un dispositif d'amplification de la dépression selon l'invention.

Des éléments identiques ou similaires à ceux représentés sur la figure 1 sont désignés par les mêmes chiffres de référence.

Dans ce second mode de réalisation, le dispositif d'amplification de dépression 18 est branché en série sur une conduite dérivation de ralenti 14 qui contourne le papillon des gaz 12 du circuit d'admission 10.

Le dispositif d'amplification de dépression 18 comporte un seul étage d'amplification dont la structure est sensiblement similaire à celle du premier étage d'amplification 20 décrit dans le premier mode de réalisation.

Toutefois, la vanne de régulation du débit de ralenti est ici remplacée par des moyens de commande 50 qui permettent de modifier la position du tube de prise de dépression 36 à l'intérieur du corps tubulaire 22 du dispositif d'amplification de pression 18.

La variation de la position axiale du tube de prise de dépression 36 provoque une variation de la section de passage disponible, entre l'extrémité aval 34 du tube 36 et le cône convergent 26 de la tuyère 24, pour les gaz inducteurs dans le dispositif d'amplification 18. Cela permet donc à ce dernier de jouer le rôle d'une vanne à débit variable qui assure la régulation du débit de ralenti.

La géométrie des pièces permet d'obtenir une position extrême de fermeture de la vanne et une position extrême d'ouverture pour permettre les gros débits de ralenti qui sont nécessaires par exemple lorsque le moteur est froid, ainsi que toutes les positions intermédiaires entre ces deux positions extrêmes.

Une telle conception d'un dispositif d'amplification de dépression 18 permet donc à celui-ci d'être traversé par des débits variables de gaz inducteurs tout en conservant à ces gaz inducteurs une vitesse suffisante dans le dispositif 18 pour créer un phénomène d'amplification de dépression dans le tube de prise dépression 36 par effet Coanda.

De plus, ce second mode de réalisation permet de réduire le nombre de composants du dispositif 18 et d'en limiter l'encombrement.

Sans sortir du cadre de l'invention, on pourra, pour assurer des modes de fonctionnement particuliers du moteur, prévoir une tubulure de dérivation de ralenti supplémentaire comportant ou non des moyens de régulation du débit qui la traverse.

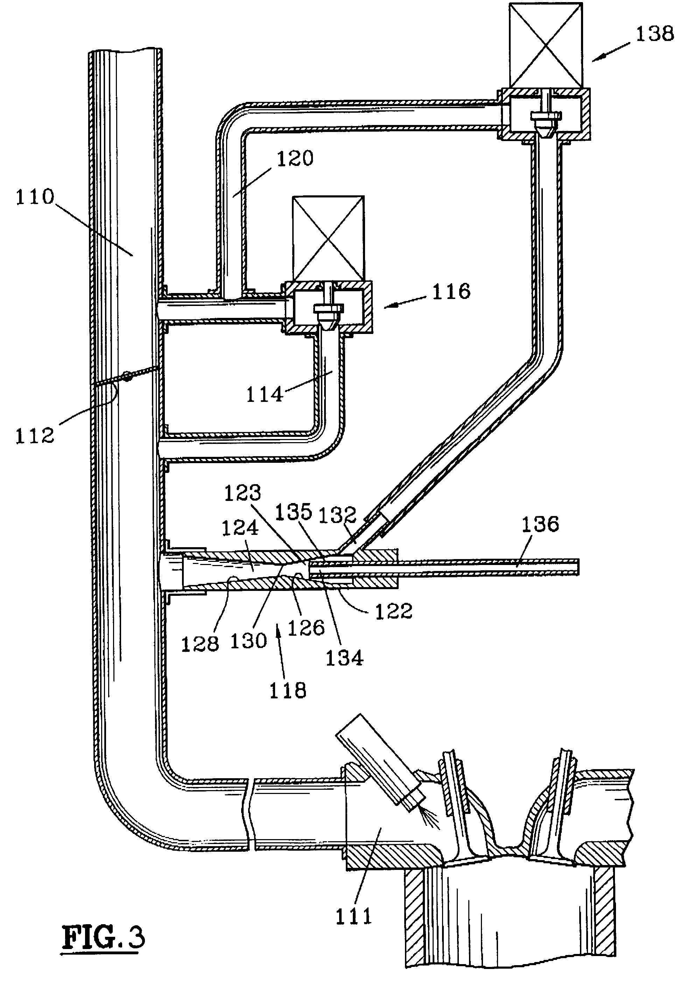

On a représenté sur la figure 3 une conduite d'admission 110 d'un moteur à combustion interne pour véhicule automobile qui est reliée en amont à un filtre à air (non représenté) et en aval au collecteur d'admission 111 du moteur.

De manière connue, la conduite d'admission 110 est munie d'un papillon des gaz 112 et d'une conduite 114 de dérivation, pour la régulation du régime de ralenti qui contourne le papillon des gaz 112, et qui comporte à cet effet une vanne de régulation 116 du débit qui la traverse.

Conformément aux enseignements de l'invention, on a également monté sur le circuit d'admission 110 un troisième mode de réalisation d'un dispositif d'amplification 118 de la dépression qui règne dans le collecteur d'admission.

Une tubulure 120 prélève une partie du débit circulant dans la conduite de ralenti 114, en amont de la vanne 116, pour alimenter le dispositif d'amplification 118.

Le dispositif d'amplification 118 comporte un corps sensiblement tubulaire 122 dont l'extrémité aval présente une forme interne de tuyère 124.

La tuyère 124 comporte successivement un cône convergent 126 et un cône divergent 128 qui délimitent un col 130 de diamètre réduit.

Le dispositif d'amplification 118 comporte également une entrée d'alimentation 132 de gaz inducteurs qui est reliée à la tubulure d'alimentation 120 et qui débouche dans le corps tubulaire 122, en amont de la tuyère 124.

L'extrémité amont du corps 122 du dispositif d'amplification 118 reçoit l'extrémité aval 134 d'un tube de prise de dépression 136.

Le tube de prise de dépression 136 est relié à différents organes annexes (non représentés) du véhicule qui nécessitent, pour leur fonctionnement, une source de dépression.

L'extrémité aval 134 du tube de prise de dépression est disposée axialement dans le corps tubulaire 122, sensiblement en aval de l'entrée d'alimentation 132 de gaz inducteurs, non loin du col 130 de la tuyère 124.

La fraction des gaz d'admission qui est admise dans le dispositif d'amplification 118 par l'entrée d'alimentation 132 de gaz inducteurs est donc canalisée entre la surface interne 123 du corps tubulaire 122 et la surface externe 135 de l'extrémité aval 134 du tube de prise de dépression 136.

Du fait de la présence du cône convergent 126 de la tuyère 124, la section de passage disponible pour les gaz inducteurs se trouve réduite et il y a donc un effet de tuyère qui accélère les gaz au niveau du col 130 de la tuyère 124.

Ces gaz à haute vitesse provoquent, par effet Coanda, une dépression dans le tube de prise de dépression 136.

Conformément aux enseignements de l'invention, la tubulure 120 d'alimentation du dispositif d'amplification 118 est munie d'une vanne auxiliaire de régulation 138.

Le débit de gaz susceptible de traverser le dispositif d'amplification 118 est limité du fait de la faible section de passage entre la surface interne 123 du corps tubulaire 122 et la surface externe 135 de l'extrémité aval 134 du tube de prise de dépression 136.

De ce fait, cette section de passage est suffisante pour de faibles débits de ralenti, mais se révèle très rapidement insuffisante lorsque le débit de ralenti augmente, du fait par exemple d'un appel de puissance de l'alternateur ou du système de climatisation de l'habitacle.

Ainsi, pour les faibles débits, la vanne 116 de régulation du ralenti est fermée et le débit de ralenti est entièrement contrôlé par la vanne auxiliaire 138.

Dans ce cas de fonctionnement, l'intégralité du débit de ralenti traverse le dispositif d'amplification 118 de manière à provoquer un effet maximal d'amplification de la dépression pour alimenter les organes annexes.

Lorsque le débit de ralenti excède le débit maximal susceptible de traverser le dispositif d'amplification 118, c'est-à-dire lorsque la vanne auxiliaire 138 est complètement ouverte, la vanne de régulation 116 s'ouvre progressivement pour fournir au moteur le supplément de débit d'air nécessaire à son bon fonctionnement.

Le débit de ralenti est alors la somme du débit traversant le dispositif d'amplification 118 et de celui traversant la vanne 116 de régulation du ralenti.

Le débit maximum susceptible de traverser le dispositif d'amplification 118 est choisi de manière à obtenir un effet maximal d'amplification de la dépression et dépend des caractéristiques géométriques de la tuyère 124 du dispositif d'amplification 118.

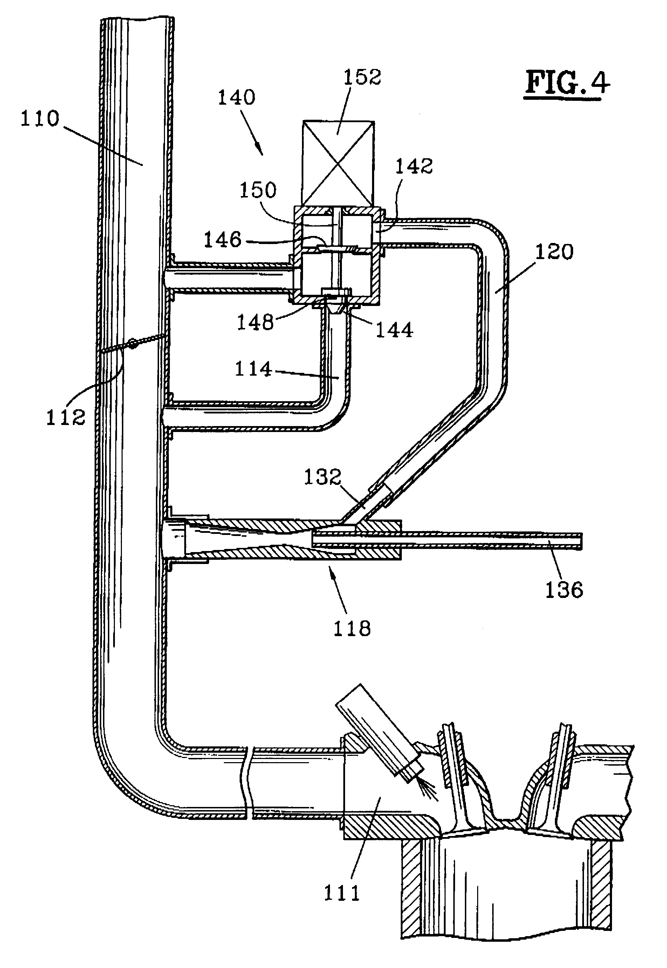

On a représenté sur la figure 4 une quatrième variante de réalisation de l'invention.

Dans cette variante, on a remplacé les deux vannes de régulation du débit du troisième mode de réalisation par une seule vanne 140 à deux sorties.

Cette vanne 140 de régulation est donc interposée dans la dérivation de ralenti 114.

La première sortie 142 alimente la tubulure d'alimentation 120 du dispositif d'amplification 118 et la seconde sortie 144 alimente la dérivation de ralenti 114.

Les deux sorties 142, 144 de la vanne 140 sont commandées chacune par un pointeau distinct 146, 148 qui sont tous les deux agencés sur une tige 150 qui se déplace axialement sous l'effet d'un dispositif électromagnétique 152 du type moteur pas-à-pas ou du type solénoïde.

Afin d'obtenir un fonctionnement similaire à celui du premier mode de réalisation, la vanne 140 est conçue de sorte que le début de la levée du pointeau 148 qui alimente la dérivation de ralenti 114 se déroule à débit nul, c'est-à-dire qu'en début de déplacement de la tige 150, seul le pointeau 146 qui alimente la tubulure 120 et donc le dispositif d'amplification 118 laisse passer un débit de gaz.

Ainsi, pour un faible débit de ralenti, la totalité de ce débit traverse le dispositif d'amplification tandis que lorsque le débit de ralenti excède le débit maximal susceptible de traverser le dispositif d'amplification 118, le pointeau 146 commence à laisser passer des gaz d'admission de manière de permettre un fonctionnement normal du moteur.

Une telle conception du circuit de ralenti du moteur permet d'utiliser au mieux les gaz d'admission pour créer un effet d'amplification de dépression tout en gardant une grande plage de variation possible pour ce débit.

## Revendications

1. Moteur à combustion interne pour véhicule automobile du type comportant une conduite de ralenti (14, 114) qui est montée en dérivation sur le circuit d'admission (10, 110), qui contourne le papillon des gaz (12, 112) et dans laquelle est interposée une vanne de régulation (16, 116) de ralenti du moteur, du type comportant un dispositif d'amplification (18, 118) de la dépression du circuit d'admission (10, 110) à effet Venturi-Coanda qui coopère avec la vanne (16, 116) de régulation de ralenti du moteur et qui utilise au moins une partie du débit dans la conduite de ralenti (14, 114) comme débit inducteur dans le dispositif (18, 118) pour fournir une dépression amplifiée à des organes annexes du véhicule tel qu'un système de freinage à dépression, caractérisé en ce qu'au moins pour les faibles débits de ralenti, la totalité du débit de ralenti traverse le dispositif d'amplification (18, 118).

2. Moteur selon la revendication 1, caractérisé en ce que le dispositif d'amplification (118) est muni d'une vanne commandée (138, 140) de régulation du débit inducteur qui le traverse et en ce que la valeur de ce débit de ralenti est déterminée par le degré d'ouverture de la vanne de régulation (138, 146) du débit inducteur traversant le dispositif d'amplification (118) de la dépression.

3. Moteur selon la revendication 2, caractérisé en ce que pour les forts débits de ralenti, la vanne de régulation (138, 146) du débit inducteur qui traverse le dispositif d'amplification (118) de la dépression est ouverte de manière à déterminer un débit de fonctionnement optimal dans le dispositif (118), et en ce que le complément de débit de ralenti nécessaire au fonctionnement du moteur est déterminé par la vanne de régulation (116, 148) du débit de ralenti.

4. Moteur selon l'une quelconques des revendications 1 à 3, caractérisé en ce qu'il comporte une vanne (140) unique de régulation du débit de ralenti interposée dans la conduite de ralenti (114) qui comporte deux sorties à ouverture commandée dont la première (144) débouche dans la conduite de ralenti (114) et dont la seconde (142) est reliée à une entrée (132) de débit inducteur du dispositif (118), et en ce que l'ouverture de la première sortie (144) est retardée par rapport à l'ouverture de la seconde sortie (142).

5. Moteur selon la revendication 4, caractérisé en ce que la vanne (140) de régulation de ralenti comporte un corps principal dans lequel une tige (150) peut coulisser axialement sous l'effet de moyens de commandes (152), notamment électromagnétiques, en ce que la tige (150) porte deux pointeaux (146,148) destinés à coopérer chacun avec un siège pour déterminer les deux sorties (142, 144) de la vanne (140), et en ce que le pointeau (148) de la première sortie (144) comporte une course morte qui permet de retarder l'ouverture de la première sortie (144) par rapport à la seconde (142).

6. Moteur selon la revendication 1, caractérisé en ce que le dispositif d'amplification (18) de la dépression du circuit d'admission (10) comporte une tuyère convergente-divergente (24), un tube de prise de dépression (36) monté coaxialement en amont dans la tuyère (24) de manière à déboucher sensiblement au niveau du col (30) de la tuyère (24) et une entrée d'alimentation (32) du débit inducteur qui débouche sensiblement en amont de la tuyère (24) de manière que le débit inducteur, accéléré dans la tuyère (24) par effet Venturi, provoque une dépression supplémentaire par effet Coanda dans le tube de prise de dépression (36), en ce que la vanne de régulation (16) du débit de ralenti et le dispositif d'amplification de dépression (18) sont montés en série dans la conduite de ralenti (14), et en ce que la totalité du débit de ralenti est utilisée comme débit inducteur dans le dispositif d'amplification de la dépression (18).

7. Moteur selon la revendication 6, caractérisé en ce que le dispositif d'amplification de la dépression (18) comporte deux étages d'amplification amont (20) et aval (38) disposés en série, et en ce que le débit de ralenti est partagé en deux débits inducteurs alimentant les deux étages (20, 38) respectivement.

8. Moteur selon la revendication 7, caractérisé en ce que l'étage d'amplification amont (20) possède une section de passage annulaire, délimitée entre son tube de prise de dépression (36) et sa tuyère (24), inférieure à la section de passage de l'étage d'amplification aval (38), le divergent (28) de la tuyère (24) de l'étage d'amplification amont (20) constituant le tube de prise de dépression de l'étage d'amplification aval (38).

9. Moteur selon la revendication 6, caractérisé en ce que la position axiale du tube de prise de dépression (36) dans la tuyère (24) est réglable de manière à faire varier la section de passage disponible pour le débit inducteur entre au moins deux valeurs.

10. Moteur selon la revendication 6, caractérisé en ce que la position axiale du tube de prise de dépression (36) dans la tuyère (24) est commandée entre deux positions extrêmes d'ouverture et de fermeture de manière à faire varier la section de passage disponible pour le débit de ralenti afin de réaliser la vanne de régulation de ralenti intégrée au dispositif d'amplification de la dépression (18).
